# FASCICULE DE BREVET EUROPEEN

(11) **EP 3 762 796 B1**
(45) Date de publication et mention de la délivrance du brevet: **30.07.2025**
(21) Numéro de dépôt: 19709669.6
(22) Date de dépôt: 04.03.2019
(51) Int. Cl.: G06N 3/08

(54) **MÉTHODE D'ASSISTANCE D'UN CONTRÔLE QUALITÉ DE PIÈCES FABRIQUÉES**
VERFAHREN ZUR UNTERSTÜTZUNG DER QUALITÄTSLENKUNG VON HERGESTELLTEN GEGENSTÄNDEN
METHOD TO SUPPORT QUALITY CONTROL OF MANUFACTURED OBJECTS

(30) Priorité: 06.03.2018 BE 201805135
(43) Date de publication de la demande: 13.01.2021
(73) Titulaire: Safran Aero Boosters, 4041 Herstal (BE)
(72) Inventeur: RAIMARCKERS, Nicolas, 4263 Tourinne (BE); HUBERT, Christophe, 4520 VINALMONT (BE)
(74) Mandataire: Gevers Patents
(86) Numéro de dépôt international: PCT/EP2019/055294
(87) Numéro de publication internationale: WO 2019/170595

(56) Documents cités:
- WO-A2-01/39919
- US-A- 5 544 256
- US-A- 6 122 397
- JIAXIN SHAO ET AL: "Automatic weld defect detection in real-time X-ray images based on support vector machine", IMAGE AND SIGNAL PROCESSING (CISP), 2011 4TH INTERNATIONAL CONGRESS ON, IEEE, 15 October 2011 (2011-10-15), pages 1842 - 1846, XP032071079, ISBN: 978-1-4244-9304-3, DOI: 10.1109/CISP.2011.6100637
- WANG G ET AL: "Automatic identification of different types of welding defects in radiographic images", NDT&E INTERNATIONAL, ELSEVIER, AMSTERDAM, NL, vol. 35, no. 8, 1 December 2002 (2002-12-01), pages 519 - 528, XP004395857, ISSN: 0963-8695, DOI: 10.1016/S0963-8695(02)00025-7
- STAVRIDIS JOHN ET AL: "Quality assessment in laser welding: a critical review", THE INTERNATIONAL JOURNAL OF ADVANCED MANUFACTURING TECHNOLOGY, SPRINGER, LONDON, vol. 94, no. 5, 29 May 2017 (2017-05-29), pages 1825 - 1847, XP036395238, ISSN: 0268-3768, [retrieved on 20170529], DOI: 10.1007/S00170-017-0461-4

## Description

### Domaine technique

L'invention concerne une méthode d'assistance d'un contrôle qualité de pièces fabriquées.

### Art antérieur

Lors de la production de pièces industrielles, par exemple dans le domaine aéronautique, des contrôles qualité sont normalement effectués afin de s'assurer que les pièces satisfassent à certains critères tels que l'intégrité, la fiabilité, l'absence de défauts majeurs, ...

Dans certains cas, ces contrôles qualité sont essentiellement effectués en deux étapes :
1) acquérir des images de la pièce à contrôler, par exemple, au moyen de techniques telles que les rayons X, les scans tridimensionnels, ou encore la tomographie ;
2) vérifier la qualité de la pièce à partir de ces images.

Dans un objectif de gain de temps, il est connu de chercher à automatiser au moins partiellement ces contrôles. Par exemple, le document JIAXIN SHAO ET AL : « Automatice weld defect detection in real-time X ray images based on support vector machine » ; IMAGE AND SIGNAL PROCESSING (CISP), 2011 4TH INTERNATIONAL CONGRESS ON, IEEE, 15 Octobre 2011 (2011-10-15), pages 1842-1846, XP032071079, DOI :10.1109/CISP.2022.6100637, ISBN : 978-1-4244-9304-3, le document WANG ET AL : « Automatic identification of different types of welding defects in radiographic images", NDT&E INTERNATIONAL, ELSEVIER, AMSTERDAL, NL, vol. 35, no. 8, 1 décembre 2002 (2002-12-01), pages 519-528, XP004395857, ISSN: 0963-8695, DOI: 10.1016/S0963-8695(02)00025-7, le document STARVRIDIS JOHN ET AL : « Quality assessment in laser welding: a critical review", THE INTERNATIONAL JOURNAL OF ADVANCED MANUFACTURING TECHNOLOGY, SPRINGER, LONDON, vol. 94, no. 5, 29 mai 2017 (2017-05-29), pages 1825-1847, XP036395238, ISSN: 0268-3768, DOI: 10.1007/S00170-017-0461-4 et le document WO 01/39919 décrivent ou évoquent des procédés de détection de défauts dans des soudures à l'aide d'algorithmes entrainables. Des images obtenues par rayons X sont, le cas échéant, exploitées. Le brevet US 6,122,397 divulgue une méthode de détection de défauts de surfaces de plaquettes de semi-conducteurs sur base d'exceptions à des règles structurelles de motifs de plaquettes qui sont prédéterminées au moyen d'un apprentissage au moins semi-automatique.

Il existe cependant des contextes dans lesquels l'intervention d'un opérateur lors de l'étape (2) est, à ce jour, indispensable pour des pièces industrielles susceptibles de donner des images complexes à interpréter. C'est par exemple le cas pour un contrôle qualité de soudure d'aubes d'une turbomachine d'aéronef. D'une part, une erreur dans ce contrôle qualité peut avoir des répercutions extrêmement graves, d'où la nécessité de le mener avec la plus grande exactitude possible. D'autre part, comme deux aubes ne sont jamais soudées identiquement, il n'est pas possible d'exploiter même partiellement d'une méthode de détection basée sur des motifs ou modèles.

Lors de sa mise en pratique, un tel contrôle qualité de soudure d'une grande quantité d'aubes est donc long et fastidieux, et génère en outre un risque élevé d'erreur de la part des opérateurs dans leurs interprétations des images acquises à l'étape (1).

### Résumé de l'invention

Un objet de l'invention est de fournir une méthode d'assistance d'un contrôle qualité, permettant une détection des défauts de soudure d'aubes d'une turbomachine à la fois fiable, rapide et efficace.

À cet effet, l'invention propose une méthode d'assistance d'un contrôle qualité de pièces fabriquées dont chacune comprend au moins une aube soudée, de préférence à une virole, d'une turbomachine d'un aéronef ; la méthode comprenant les étapes suivantes :
(i) obtenir des images par rayons X des pièces fabriquées ;
(ii) développer un algorithme apte à qualifier au moins une des pièces fabriquées sur base d'au moins une des images, la qualification obtenue comprenant une information parmi une détection d'un défaut d'une soudure ou une absence de défaut d'une soudure ;
(iii) déterminer un marquage à appliquer sur au moins une portion d'au moins une des images ;
(iv) appliquer le marquage sur une sélection des images ;
(v) effectuer un entraînement de l'algorithme sur base du marquage de la sélection des images ;
(vi) développer une version améliorée de l'algorithme sur base de l'entraînement ;
(vii) qualifier une partie des pièces fabriquées sur base d'une partie des images, au moyen :
   - d'informations fournies par un opérateur, et
   - de la version améliorée de l'algorithme, la qualification obtenue comprenant une information parmi une détection d'un défaut d'une soudure ou une absence de défaut d'une soudure ;
(viii) déterminer une performance de la version améliorée de l'algorithme ;
(ix) qualifier une part des pièces fabriquées sur base d'une part des images,
   cette étape (ix) comprenant les sous-étapes suivantes :
   - déterminer une partition en une première et une deuxième portions de la part des pièces fabriquées, sur base de la performance ;
   - qualifier la première portion de la part des pièces fabriquées sur base d'un lot de la part des images, au seul moyen de la version améliorée de l'algorithme ;
   - appliquer le marquage sur un autre lot de la part des images ;
   - effectuer un autre entraînement de la version améliorée de l'algorithme sur base du marquage de l'autre lot de la part des images ;
(x) développer une version améliorée de l'algorithme sur base de la performance et de l'autre entraînement ;
(xi) répéter les étapes (vii) à (x).
La soudure correspond préférentiellement en une soudure de l'aube soudée avec la virole avec laquelle est l'aube est préférentiellement soudée.

La méthode selon l'invention permet d'effectuer un contrôle qualité de ces pièces fiable, rapide et efficace. En particulier, la méthode permet de vérifier les soudures des aubes d'une turbomachine d'aéronef de façon fiable, rapide et efficace en réduisant le temps d'intervention de l'opérateur.

En effet, la méthode propose un développement par version d'un algorithme apte à qualifier des pièces fabriquées sur base d'images de ces pièces fabriquées obtenues à l'étape (i). Une version 0 de l'algorithme est développée de façon théorique à l'étape (ii), puis entraînée à l'étape (v) grâce à un marquage des images judicieusement défini et appliqué aux étapes (iii) et (iv). Une version 1 de l'algorithme développée à l'étape (vi) résulte de cet entraînement. La méthode selon l'invention propose alors d'utiliser cette version 1 de l'algorithme dans la qualification d'une partie des pièces fabriquées sur base d'une partie des images. Ces dernières sont présentées à la fois à la version 1 de l'algorithme et à un opérateur afin déterminer une qualification des pièces fabriquées sur base desquelles ont été obtenues ces images à l'étape (i). Chacune de ces images étant préférentiellement traitée au moins partiellement au moins par l'opérateur et la version 1 de l'algorithme, une performance de celle-ci peut ainsi être déterminée à l'étape (viii). Des exemples préférés de telle performance sont données dans la suite du résumé de l'invention. La performance permet préférentiellement de déterminer si la version 1 de l'algorithme est fiable. Dans la négative, cette version 1 est éliminée et le développement d'une nouvelle version de l'algorithme est reprise à partir d'une nouvelle version 0, et la première portion de la part de l'étape (ix) est vide. Dans l'affirmative, cette version 1 est validée et conservée. Elle sert alors de base à de nouveaux développement de l'algorithme. Dans les deux cas susmentionnés, le développement d'une nouvelle version de l'algorithme est basé sur la performance de l'algorithme et réalisé à l'étape (x) de la méthode selon l'invention.

Ainsi, l'opérateur est assisté dans son contrôle qualité par une version 1 d'un algorithme contribuant à une qualification d'une partie des pièces fabriquées sur base d'une partie des images. Une plus grande fiabilité du traitement de ces images est ainsi obtenue. Le risque d'erreur de la part de l'opérateur dans l'interprétation des images est également avantageusement diminué.

La version améliorée de l'algorithme de l'étape (vi) est préférentiellement distincte de la version améliorée de l'algorithme de l'étape (x). L'usage du même terme « version améliorée » permet de d'assurer une consistance dans la formulation de la méthode selon l'invention. Ainsi, la version améliorée à laquelle chacune des deux étapes (vii) et (viii) font référence consiste, d'une part, en la version améliorée développée à l'étape (vi) lors de la première application des étapes de la méthode, et d'autre part, en la version améliorée développée à l'étape (x) lors des applications récursives des étapes (vii) à (x) de la méthode, en vertu de l'étape (xi). Dans le présent résumé et dans la description détaillée de l'invention, les terme « version améliorée » et « version » sont utilisés de façon équivalente.

L'application récursive des étapes (vii) à (x) de la méthode permet d'accroître la performance de l'algorithme de version en version. Ainsi, préférentiellement, si la version 1 de l'algorithme n'est pas assez fiable, elle est redéveloppée et entraînée à partir d'une nouvelle version 0 de l'algorithme, jusqu'à ce qu'il soit obtenu une version 1 de l'algorithme dont la performance soit suffisante. En particulier, une telle version amène préférentiellement le risque de non détection d'un défaut comme étant quasi nul. Une fois une telle version 1 de l'algorithme développée, elle est validée et conservée. Elle sert de base aux nouveaux développements qui interviennent de part les applications récursives des étapes (vii) à (x) de la méthode, en vertu de l'étape (xi). Une version 2 de l'algorithme est alors développée, préférentiellement sur base d'un nouvel entraînement de la version 1 de l'algorithme. Cette version 2 de l'algorithme est alors utilisée dans la qualification d'une autre partie des pièces fabriquées sur base d'une autre partie des images analysées au moins partiellement par la version 2 de l'algorithme et par un opérateur. Préférentiellement, ces images sont également analysées par la version 1 de l'algorithme. Après qu'un certain nombre d'images aient été analysées ou après un certain temps, une performance de cette version 2 de l'algorithme est déterminée et il est alors décidé de valider et de conserver cette version 2, ou bien de reprendre les développements de l'algorithme à la version 1. L'application de la méthode se poursuit ainsi, de version en version, en vertu de l'étape (xi). En particulier, l'invention comprend avantageusement une méthode d'optimisation du processus d'entrainement, d'amélioration et de validation d'un algorithme pour assister un opérateur lors du contrôle qualité.

Il s'ensuit que l'opérateur est non seulement assisté dans son contrôle qualité par un algorithme contribuant à une qualification d'une partie des pièces fabriquées sur base d'une partie des images, mais aussi que cette algorithme est d'autant plus performant que son expérience de traitement des images grandit.

La méthode selon l'invention est en outre tout particulièrement efficace grâce à l'étape (ix), En effet, au fil des versions améliorées de l'algorithme, toutes les images ne sont plus nécessairement montrées à l'opérateur. L'algorithme qualifie seul une part des pièces fabriquées sur base d'images que sa performance lui permet d'analyser seul. Ainsi, au fil des versions améliorées de l'algorithme, l'opérateur ne travaille plus que sur les images les plus litigieuses sur lesquelles il n'est pas fiable de laisser une version de l'algorithme travailler seul. En conséquence, la fiabilité du contrôle de qualité s'en trouve d'autant plus accrue vu que l'opérateur dispose de plus de temps pour analyser les images les plus litigieuses. En outre, la rapidité du traitement des images augmente au fil des versions améliorées de l'algorithme, vu que ces dernières prennent en charge seule un nombre de plus en plus grand d'images.

Compte tenu de cette avantageuse étape (ix), une réalisation préférée de l'étape (x) de la méthode est avantageusement décrite comme étant équivalente à des itérations des étapes (iv), (v) et (vi) de la méthode sur l'autre lot de la part des images à partir d'une version de l'algorithme. En particulier, et de façon avantageuse, cette réalisation de l'étape (x) permet à la dernière version améliorée de l'algorithme de qualifier toutes les pièces fabriquées pour lesquelles les images correspondantes (c'est-à-dire, celle du lot de la part) sont analysables relativement à la performance de cette version améliorée de l'algorithme. La version améliorée de l'algorithme n'est pas encore apte à traiter les images de l'autre lot avec suffisamment de fiabilité. En particulier, cette version améliorée n'est pas encore apte à qualifier seule les pièces fabriquées qui correspondent aux images de l'autre lot. Cette version améliorée subit alors un autre entraînement sur base de ce lot d'images dans le but de définir sa nouvelle version améliorée dont la performance sera elle-même évaluée lors d'une application récursive de l'étape (viii) de la méthode.

Préférentiellement, les étapes (ii) à (vi) de la méthode sont exécutées off line car elles constituent des étapes de conception et d'entraînement de l'algorithme. Les étapes (vii) et (xi) sont, quant à elles, exécutées on line, au sein même du cycle normal de contrôle qualité des pièces fabriquées. Pour ces étapes, par l'étape (ix), la méthode selon l'invention permet une amélioration par version de l'algorithme dans un cycle normal de contrôle qualité des pièces fabriquées, étant donné qu'une version validée suffisamment performante de l'algorithme est toujours utilisée en parallèle d'une version en cours d'amélioration.

La méthode selon l'invention est particulièrement fiable, rapide et efficace, d'autant plus pour détection des défauts de soudure d'aubes d'une turbomachine.

L'usage d'une turbomachine comprenant une aube défectueuse, par exemple, une aube présentant un défaut de soudure, peut avoir de graves conséquences. Il est donc crucial de détecter un tel défaut de soudure, ce qui ne peut se faire sur base automatisée à partir de motifs ou modèle car chaque telle soudure est différente. En outre, la géométrie des aubes génère des zones d'ombre sur l'image empêchant l'inspection de la soudure de l'aube. Il est donc nécessaire dans ce cas d'acquérir un très grand nombre d'images, typiquement par rayons X, à qualifier de façon particulièrement minutieuse. La méthode selon l'invention est parfaitement adaptée à ce contexte.

Préférentiellement, chacune des pièces fabriquées comprend au moins une aube et une virole d'une turbomachine d'aéronef, qui sont soudées entre elles. Selon un mode de réalisation particulier de la méthode, les pièces sont des aubes et/ou des viroles d'une turbomachine d'un aéronef.

La qualification aux étapes (ii), (vii) et (ix) comprend de préférence une information parmi : une détection d'un défaut ou une absence de défaut ; le défaut comprenant, par exemple, une soudure défectueuse de la pièce fabriquée et/ou une fissure dans la pièce fabriquée et/ou un manque de matière et/ou une porosité d'une zone de la pièce fabriquée. En outre, la méthode selon l'invention est parfaitement adaptée pour détecter tous ces défauts spécifiquement pour une pièce comprenant une aube d'une turbomachine d'aéronef.

Avantageusement, le choix d'un marquage optimal aux étapes (iii) à (iv) permet de minimiser le nombre d'images qui sont nécessaires à l'entraînement de l'étape (v).

Selon un mode de réalisation particulier de la méthode, le marquage déterminé à l'étape (iii) comprend des annotations et/ou symboles et/ou couleurs qui sont déterminés sur base d'au moins un gradient d'un niveau d'intensité de la au moins une portion d'au moins une des images.

Préférentiellement, le niveau d'intensité est un niveau d'intensité de couleur et/ou de gris.

Avantageusement, la détermination d'éléments de marquage sur base d'au moins un tel gradient permet de tenir compte de l'évolution directionnelle d'intensité des couleurs et/ou de gris. En effet, une couleur et/ou d'une nuance de gris considérée seule sur une image ne peut être assimilée à un défaut sans la resituée dans son contexte, c'est-à-dire dans l'évolution d'intensité de couleur et/ou de gris de l'image.

Avantageusement, différentes annotations et/ou symboles et/ou couleurs peuvent être employées dans le marquage pour désigner différentes types des défauts et différents niveaux de fiabilité des indications. Par exemple, un marquage d'une fissure est fait par un trait, alors qu'un marquage d'un manque de matière est fait par une ellipse. Par exemple, un marquage d'une indication litigieuse est fait par une couleur, et un marquage d'une indication fiable est fait dans une autre couleur.

Selon un mode de réalisation particulier de la méthode, l'entraînement de l'étape (v) comprend une identification des marquages réalisés sur les images de la sélection.

Selon un mode de réalisation particulier de la méthode, le marquage est appliqué à l'étape (iv) sur une pluralité de fenêtrages d'au moins une zone d'intérêt des images de la sélection.

Avantageusement, l'application du marquage est ainsi réalisé sur des zones d'intérêt des images, ce qui permet un gain de temps sensible pour l'entrainement de l'algorithme. Par exemple, dans le cas d'un contrôle qualité des aubes d'une turbomachine, les soudures sont des zones particulièrement critiques à inspecter. Le marquage d'une image d'une aube obtenue, par exemple, par rayons X, est ainsi limité à des zones d'intérêt comprenant les zones de soudure.

Avantageusement, lorsque le marquage est déterminé sur base d'au moins un gradient d'un niveau d'intensité, l'application du marquage sur plusieurs fenêtrages d'au moins une zone d'intérêt d'une image permet de tenir compte variations du niveau d'intensité selon plusieurs directions globalement définies dans ces fenêtrages, et donc d'obtenir un marquage plus précis contribuant à un entrainement plus rapide.

Selon un mode de réalisation particulier de la méthode, la version améliorée de l'algorithme développée à l'étape (vi) est apte à qualifier la sélection des images.

Selon un mode de réalisation particulier de la méthode, l'étape (vii) comprend les étapes suivantes :
- déterminer des premières données de qualification de chacune des pièces fabriquées de la partie des pièces fabriquées sur base d'un lot de la partie des images, au moyen de renseignements fournis par un premier opérateur ;
- déterminer des deuxièmes données de qualification de chacune des pièces fabriquées de la partie des pièces fabriquées sur base du lot, au moyen de la version améliorée de l'algorithme ;
- vérifier une concordance des premières et deuxièmes données de qualification ;
- qualifier chacune des pièces fabriquées retenue sur base des premières et deuxièmes données de qualification lorsque celles-ci sont essentiellement semblables ;
- qualifier chacune des pièces fabriquées retenue sur base d'informations fournies par un deuxième opérateur lorsque les premières et deuxièmes données de qualification diffèrent.

La réalisation de ce mode de réalisation particulier de la méthode reste dans le cadre défini à l'étape (vii). En effet, la partie des pièces fabriquées est qualifiée sur base d'une partie des images à l'étape (vii) au moyen d'informations fournies par un opérateur qui est en le deuxième opérateur susmentionnée.

Avantageusement, la méthode selon ce mode de réalisation particulier de l'invention induit une fiabilité encore plus grande du contrôle qualité des pièces fabriquées.

En effet, lorsque les données de qualification fournies par le premier opérateur diffèrent des données de qualification fournie par la version améliorée de l'algorithme, le deuxième opérateur intervient et tranche la question et confirme ou non le choix du premier opérateur. Ce deuxième opérateur est de préférence un super expert dans l'interprétation des images obtenues à l'étape (i).

Selon un mode de réalisation particulier de la méthode, la performance est déterminée à l'étape (viii) à partir d'au moins un des éléments suivants :
- un taux de faux positifs de détection d'un défaut d'une des pièces fabriquées sur base de la partie des images, et
- un taux de faux négatifs de détection d'un défaut d'une des pièces fabriquées sur base de la partie des images,
les taux de faux positifs et de faux négatifs étant déterminés sur base d'un nombre d'images.

La performance selon ce mode de réalisation particulier de la méthode correspond à une certaine évaluation de la fiabilité de la version améliorée de l'algorithme.

Préférentiellement, le taux de faux positifs est inférieur à 5%. Préférentiellement, le taux de faux négatifs est inférieur à 0,1%, plus préférentiellement inférieur à 0,01%. Il est crucial que le taux de faux négatifs soit quasiment nul afin d'assurer une fiabilité optimale de la version améliorée de l'algorithme.

Il est préféré que les différentes versions améliorées de l'algorithme développées et validées au fil de l'application récursive des étapes (vii) à (x) tel qu'il est expliqué précédemment dans le résumé de l'invention induisent une détermination d'une performance qui soit telle qu'au moins un des taux susmentionnés baisse de façon stricte d'une version à la version suivante.

Préférentiellement, la performance d'une version améliorée de l'algorithme est déterminée après un certain nombre d'images analysées au bout d'un certain temps, par exemple, une semaine dans le cycle normal de contrôle qualité des pièces fabriquées.

Selon les termes employés plus haut dans ce résumé, la deuxième version de l'algorithme correspond de préférence soit à une nouvelle version 0 entrainée de l'algorithme ou soit à une version 2 de l'algorithme, celle-ci consistant en la version 1 de l'algorithme qui a été nouveau entrainée.

Selon un mode de réalisation particulier du mode de réalisation particulier de la méthode, l'étape (xi) comprend les étapes suivantes :
(xii) qualifier une partie des pièces fabriquées sur base d'une partie des images, au moyen :
   - d'informations fournies par un opérateur, et
   - de la deuxième version de l'algorithme,
   ainsi qu'au moyen de la première version de l'algorithme lorsque la performance déterminée à l'étape (viii) comprend un taux d'erreur inférieur à premier seuil ;
(xiii) déterminer une performance de la deuxième version de l'algorithme ;
(xiv) développer une version améliorée de l'algorithme sur base de la performance, la version améliorée consistant en une troisième version de l'algorithme ;
(xv) qualifier une partie des pièces fabriquées sur base d'une partie des images, au moyen :
   - d'informations fournies par un opérateur, et
   - de la troisième version de l'algorithme, ainsi qu'au moyen de la deuxième version de l'algorithme lorsque la performance déterminée à l'étape (xiii) comprend un taux d'erreur inférieur à un deuxième seuil, le deuxième seuil étant inférieur au premier seuil ; ou, ainsi qu'au moyen de la première version de l'algorithme lorsque la performance déterminée à l'étape (xiii) comprend un taux d'erreur supérieur au deuxième seuil et que la performance déterminée à l'étape (viii) comprend un taux d'erreur inférieur au premier seuil ;
(xvi) déterminer une performance de la troisième version de l'algorithme ;
(xvii) développer une version améliorée de l'algorithme sur base de la performance, la version améliorée consistant en une quatrième version de l'algorithme.

Avantageusement, les premières itérations induites par l'étape (xi) de la méthode selon ce mode de réalisation particulier de la méthode sont développées de façon à ce que la qualification des pièces fabriquées aux étapes (vii) récursivement appliquées soient également effectuées au moyen de la dernière version améliorée de l'algorithme dont la performance soit suffisamment bonne, préférentiellement au sens où un taux de faux positifs ou de faux négatifs est inférieur à un certain seuil, et ce, à chaque itération, lorsqu'une telle version améliorée est développée au moment de l'application de l'étape (vii).

### Brève description des figures

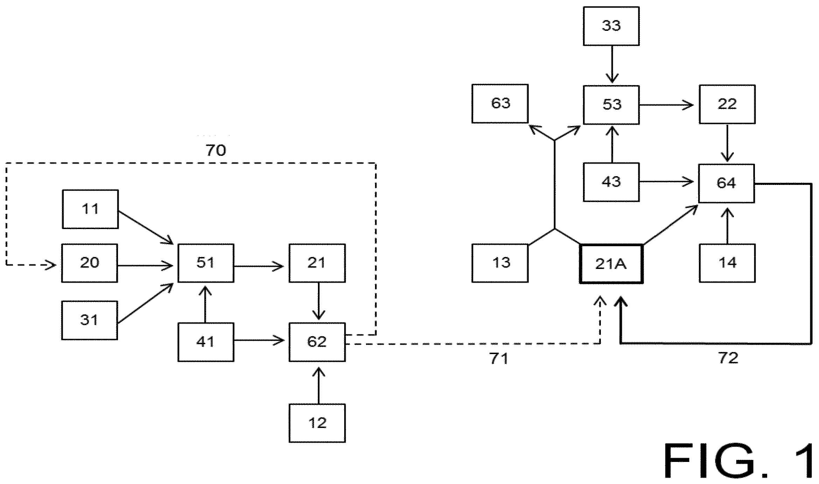

D'autres caractéristiques et avantages de la présente invention apparaîtront à la lecture de la description détaillée qui suit pour la compréhension de laquelle on se reportera à la figure 1 annexée illustrant une schématisation d'une mise en œuvre de la méthode selon un mode de réalisation de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros de référence aux dessins ne peut être considérée comme limitative, y compris lorsque ces numéros sont indiqués dans les revendications.

### Description détaillée de modes de réalisation particuliers de l'invention

La présente invention est décrite avec des réalisations particulières et des références à des figures mais l'invention n'est pas limitée par celles-ci. Les dessins ou figures décrits ne sont que schématiques et ne sont pas limitants.

La figure 1 illustre une schématisation d'une mise en œuvre de d'une méthode d'assistance d'un contrôle qualité de pièces fabriquées selon un mode de réalisation de l'invention. Les références correspondent à différents éléments intervenant dans l'exécution de la méthode, alors que les flèches correspondent à l'intervention de ces éléments dans l'exécution de la méthode.

Préférentiellement, les pièces fabriquées sont des aubes et/ou des viroles d'une turbomachine d'un aéronef. Ce cas préféré, n'est en aucunement limitatif de la portée du terme « pièces fabriquées » dans la présente description.

Les références 11, 12, 13 et 14 correspondent à des ensembles d'images des pièces fabriquées, ces images étant obtenues par l'exécution de l'étape (i) de la méthode selon l'invention. Ces images peuvent être acquises au moyen de techniques telles que des rayons X, des scans tridimensionnel, ou encore la tomographie ; ces exemples n'étant pas limitatifs. Les ensembles d'images 11, 12, 13 et 14 constituent des images obtenues sans nécessairement comprendre toutes les images obtenues. Les termes « partie », « part » ou « lot » d'images peuvent être utilisés de façon équivalente pour désigner les ensembles d'images 11, 12, 13 et 14. L'utilisation de ces différents termes dans les revendications vise simplement à différentier les ensembles d'images dont il est sujet.

Plusieurs images de chacune des pièces fabriquées sont préférentiellement obtenues par l'exécution de l'étape (i) de la méthode selon l'invention. Des images d'une même pièce fabriquée représentent, par exemple, différentes partie de la pièce fabriquée, considérées sous différents angles. De façon préférée mais non limitative de la portée de l'invention, chacun des ensembles d'images 11, 12, 13 et 14 est obtenu à partir d'un sous-ensemble des pièces fabriquées.

Les références 20, 21 et 22 correspondent à des versions ou versions améliorées de l'algorithme dont la présente invention fait l'objet. Cet algorithme est apte à qualifier au moins une pièce fabriquée sur base d'au moins une des images. La référence 20 correspond à la version 0 de l'algorithme tel qu'il est développé à l'étape (ii) de la méthode. La référence 21 correspond quant à elle à la version 1 de l'algorithme tel qu'il est développé à l'étape (iv) de la méthode ou tel qu'il peut être développé à l'issue de l'étape (x) à partir d'une nouvelle version 0 de la méthode lorsque la performance déterminée à l'étape (viii) n'est pas suffisamment bonne. Par « suffisamment bonne », il faut préférentiellement entendre inférieure à un taux de faux positifs et/ou un taux de faux négatifs tel que décrit dans le résumé de l'invention. La référence 22 correspond à une version améliorée de l'algorithme développée lors de l'étape (x) de la méthode ou lors d'une de ses itérations en vertu de l'étape (xi).

La référence 21A désigne la dernière version améliorée de l'algorithme pour laquelle une performance suffisamment bonne a été déterminée lors d'une application de l'étape (viii).

Les références 31 et 33 désignent des marquages au sens discuté dans le résumé de la présente invention. Le marquage 31 est appliqué à l'ensemble d'images 11 et le marquage 33 est appliqué à un sous-ensemble de l'ensemble d'images 13.

Les références 41 et 43 désignent un opérateur.

Les références 51 et 53 désignent un entrainement d'une version de l'algorithme. Plus précisément, la référence 51 désigne un entrainement de la version 0 de l'algorithme 20 selon l'étape (v) de la méthode. Cet entrainement 51 est effectué sur base du marquage 31 des images de l'ensemble 11. La référence 53 désigne un autre entrainement de la version améliorée de l'algorithme 21A sur base du marquage 33 des images d'un sous-ensemble de l'ensemble d'images 13.

Les références 62, 63 et 64 correspondent à des qualifications de pièces fabriquées sur base respective des sous-ensembles d'images 12, 13 et 14, au moyen d'au moins un parmi des informations fournies par un opérateur et les versions respectives de l'algorithme 21, 21A et 22.

Les flèches 70, 71 et 72 représentent une conséquence de la détermination des performances des versions améliorées de l'algorithme sur l'application itérative partielle de la méthode issue de l'étape (xi).

Plus précisément, à l'issue de la qualification 62 effectuée à l'étape (vii) de la méthode selon l'invention, la performance de la version 1 de l'algorithme est déterminée telle qu'il est spécifié à l'étape (viii) de la méthode selon l'invention. Si cette performance n'est pas suffisamment bonne au sens précédemment défini, ou bien au sens où cette version n'est pas suffisamment fiable, une nouvelle version 1 de l'algorithme est développée à partir d'une nouvelle version 0 de l'algorithme. Cette étape de reprise à zéro du développement de l'algorithme est représentée par la flèche 70.

Si la susmentionnée performance est suffisamment bonne, elle est validée et conservée pour la suite de l'application de la méthode sous la référence 21A. Cette étape est représentée par la flèche 71. À partir du moment où la méthode permet schématiquement d'appliquer la flèche 71, il existe une version de l'algorithme suffisamment performante non pas seulement pour assister mais aussi pour suppléer au moins partiellement un opérateur lors du contrôle qualité. Une fois cette étape franchie, la méthode ne permet pas de revenir à la version 0 de algorithme de départ et les améliorations complémentaires de l'algorithme sont réalisés à partir de la dernière version améliorée 21A, que celle-ci soit une version 1, une version 2, ou une version ultérieure.

D'une part, la version 21A de l'algorithme qualifie ensuite une portion des pièces fabriquées représentées par des images dans un sous-ensemble de l'ensemble 13. Ceci donne lieu à la qualification 63.

D'autre part, la version 21A ayant ses limites définies par sa performance, elle subit un autre entrainement 53 sur base des images de l'ensemble 13 n'ayant pas servi de base à la qualification 63. Ceci permet de développer une version améliorée 22 de la version 21A de l'algorithme. Cette version améliorée 22 de l'algorithme est développée à l'issue d'une application itérative de l'étape (x) de la méthode. Une qualification 64 de pièces fabriquées sur base de l'ensemble d'images 14 est alors effectuée au moyen d'informations fournies par un opérateur et/ou de la version 22 de l'algorithme et/ou de la version 21A de l'algorithme. Une performance de la version 22 de l'algorithme est alors déterminée et une nouvelle version améliorée de l'algorithme développée selon le même schéma d'application de la méthode conformément à l'étape (xi). La flèche 72 indique un retour à la version 21A de l'algorithme dans le sens itératif suivant :
- si la performance de la version 22 de l'algorithme est suffisamment bonne, cette version devient la nouvelle version 21A de l'algorithme ;
- si la performance de la version 22 de l'algorithme est suffisamment bonne, elle n'est pas prise en compte dans les étapes suivantes de la méthode et les développements de l'algorithme sont repris à partir de la version 21A de l'algorithme.

En résumé, l'invention concerne principalement une méthode d'assistance d'un contrôle qualité de pièces fabriquées sur base d'images 11, 12, 13, 14 de ces pièces, comprenant une étape de qualification 62, 63, 64 de ces pièces par un opérateur 41, 43 et/ou un algorithme 21, 21A, 22 qui est développé par version sur base d'un entrainement 51, 53 effectué par l'application d'un marquage 31, 33 d'une portion de ces images. Cette méthode est particulièrement adaptée pour la détection de défaut de soudure d'aubes d'une turbomachine d'aéronef.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

Dans la cadre du présent document, les termes « premier », « deuxième », « troisième » et « quatrième » servent uniquement à différencier les différents éléments et n'impliquent pas d'ordre entre ces éléments. L'usage des verbes « comprendre » , « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut aucunement une présence d'une pluralité de ces éléments.

## Revendications

1. Méthode d'assistance d'un contrôle qualité de pièces fabriquées dont chacune comprend une aube soudée d'une turbomachine d'un aéronef ;
la méthode comprenant les étapes suivantes :
(i) obtenir des images (11, 12, 13, 14) par rayons X desdites pièces fabriquées ;
(ii) développer un algorithme (20) apte à qualifier au moins une desdites pièces fabriquées sur base d'au moins une desdites images (11, 12, 13, 14), la qualification obtenue comprenant une information parmi une détection d'un défaut d'une soudure ou une absence de défaut d'une soudure ;
(iii) déterminer un marquage (31, 33) à appliquer sur au moins une portion d'au moins une desdites images (11, 12, 13, 14) ;
(iv) appliquer ledit marquage (31) sur une sélection (11) desdites images ;
(v) effectuer un entraînement (51) dudit algorithme (20) sur base dudit marquage (31) de ladite sélection (11) desdites images ;
(vi) développer une version (21) dudit algorithme sur base dudit entraînement (51) ;
(vii) qualifier une partie desdites pièces fabriquées sur base d'une partie (12, 14) desdites images, au moyen :
- d'informations fournies par un opérateur (41, 43), et
- de ladite version (21, 21A) dudit algorithme,
la qualification (62, 64) obtenue comprenant une information parmi une détection d'un défaut d'une soudure ou une absence de défaut d'une soudure ;
(viii) déterminer une performance de ladite version (21, 21A) dudit algorithme ;
(ix) qualifier une part desdites pièces fabriquées sur base d'une part (13) desdites images,
cette étape (ix) comprenant les sous-étapes suivantes :
- déterminer une partition en une première et une deuxième portions de ladite part desdites pièces fabriquées, sur base de ladite performance ;
- qualifier ladite première portion de ladite part desdites pièces fabriquées sur base d'un lot de ladite part (13) desdites images, au seul moyen de ladite version (21A) dudit algorithme ;
- appliquer ledit marquage (33) sur un autre lot de ladite part (13) desdites images ;
- effectuer un autre entraînement (53) de ladite version (21A) dudit algorithme sur base dudit marquage (33) dudit autre lot de ladite part (13) desdites images ;
(x) développer une version (22) dudit algorithme sur base de ladite performance et dudit autre entraînement (53);
(xi) répéter les étapes (vii) à (x).

2. Méthode selon l'une quelconque des revendications précédentes, **caractérisée en ce que** le marquage (31, 33) de l'étape (iii) comprend des annotations et/ou symboles et/ou couleurs qui sont déterminés sur base d'un gradient d'un niveau d'intensité de ladite au moins une portion.

3. Méthode selon l'une quelconque des revendications précédentes, **caractérisée en ce que** ledit marquage (31) est appliqué à l'étape (iv) sur une pluralité de fenêtrages d'au moins une zone d'intérêt desdites images de ladite sélection (11).

4. Méthode selon l'une quelconque des revendications précédentes, **caractérisée en ce que** ledit entraînement (51) de l'étape (v) comprend une identification des marquages (31) réalisés sur les images de ladite sélection (11).

5. Méthode selon l'une quelconque des revendications précédentes, **caractérisée en ce que** l'étape (vii) comprend les étapes suivantes :
- déterminer des premières données de qualification de chacune des pièces fabriquées de ladite partie desdites pièces fabriquées sur base d'un lot de ladite partie (12, 14) des dites images, au moyen de renseignements fournis par un premier opérateur ;
- déterminer des deuxièmes données de qualification de chacune des pièces fabriquées de ladite partie desdites pièces fabriquées sur base dudit lot, au moyen de ladite version (21, 21A) dudit algorithme ;
- vérifier une concordance desdites premières et deuxièmes données de qualification ;
- qualifier chacune desdites pièces fabriquées sur base desdites premières et deuxièmes données de qualification lorsqu'elles sont essentiellement semblables ; et
qualifier chacune desdites pièces fabriquées sur base d'informations fournies par un deuxième opérateur lorsque lesdites premières et deuxièmes données de qualification diffèrent.

6. Méthode selon l'une quelconque des revendications précédentes, **caractérisée en ce que** ladite performance est déterminée à l'étape (viii) à partir d'au moins un des éléments suivants :
- un taux de faux positifs de détection d'un défaut d'une desdites pièces fabriquées sur base de ladite partie (12, 14) desdites images, et
- un taux de faux négatifs de détection d'un défaut d'une desdites pièces fabriquées sur base de ladite partie (12, 14) desdites images,
lesdits taux de faux positifs et de faux négatifs étant déterminés sur base d'un nombre d'images.

7. Méthode selon l'une quelconque des revendications précédentes, **caractérisée en ce que** l'étape (xi) comprend les étapes suivantes :
(xii) qualifier une partie desdites pièces fabriquées sur base d'une partie (14) desdites images, au moyen :
- d'informations fournies par un opérateur (43), et
- de ladite deuxième version (22) dudit algorithme,
ainsi qu'au moyen de ladite première version (21A) dudit algorithme lorsque ladite performance déterminée à l'étape (viii) comprend un taux d'erreur inférieur à premier seuil ;
(xiii) déterminer une performance de ladite deuxième version (22) dudit algorithme ;
(xiv) développer une version dudit algorithme (21A) sur base de ladite performance, ladite version consistant en une troisième version (22) dudit algorithme ;
(xv) qualifier une partie desdites pièces fabriquées sur base d'une partie (14) desdites images, au moyen :
- d'informations fournies par un opérateur, et
- de ladite troisième version (22) dudit algorithme,
ainsi qu'au moyen de ladite deuxième version (21A) dudit algorithme lorsque ladite performance déterminée à l'étape (xiii) comprend un taux d'erreur inférieur à un deuxième seuil, ledit deuxième seuil étant inférieur audit premier seuil ;
ou, ainsi qu'au moyen de ladite première version (21A) dudit algorithme lorsque ladite performance déterminée à l'étape (xiii) comprend un taux d'erreur supérieur audit deuxième seuil et que ladite performance déterminée à l'étape (viii) comprend un taux d'erreur inférieur audit premier seuil ;
(xvi) déterminer une performance de ladite troisième version (22) dudit algorithme ;
(xvii) développer une version dudit algorithme (21A) sur base de ladite performance, ladite version consistant en une quatrième version (22) dudit algorithme.

8. Méthode selon l'une quelconque des revendications précédentes, **caractérisée en ce que** chacune desdites pièces fabriquées comprend une aube et une virole de ladite turbomachine, soudées entre elles.

## Patentansprüche

1. Verfahren zum Unterstützen einer Qualitätskontrolle von hergestellten Teilen, von denen jedes eine verschweißte Schaufel eines Turbotriebwerks eines Luftfahrzeugs umfasst;
wobei das Verfahren die folgenden Schritte umfasst:
(i) Erhalten von Bildern (11, 12, 13, 14) durch Röntgenstrahlen der hergestellten Teile;
(ii) Entwickeln eines Algorithmus (20), der imstande ist, mindestens eines der hergestellten Teile auf Grundlage mindestens eines der Bilder (11, 12, 13, 14) zu qualifizieren, wobei die erhaltene Qualifikation eine Information aus einem Erkennen eines Fehlers einer Schweißnaht oder einer Abwesenheit eines Fehlers einer Schweißnaht umfasst;
(iii) Bestimmen einer Markierung (31, 33), die an mindestens einem Abschnitt mindestens eines der Bilder (11, 12, 13, 14) anzubringen ist;
(iv) Anbringen der Markierung (31) an einer Auswahl (11) der Bilder;
(v) Durchführen eines Antriebs (51) des Algorithmus (20) auf Grundlage der Markierung (31) der Auswahl (11) der Bilder;
(vi) Entwickeln einer Version (21) des Algorithmus auf Grundlage des Antriebs (51);
(vii) Qualifizieren eines Teils der hergestellten Teile auf Grundlage eines Teils (12, 14) der Bilder, anhand:
- von Informationen, die von einem Bediener (41, 43) bereitgestellt werden, und
- der Version (21, 21A) des Algorithmus,
der erhaltenen Qualifikation (62, 64), umfassend eine Information aus einem Erkennen eines Fehlers einer Schweißnaht oder einer Abwesenheit eines Fehlers einer Schweißnaht;
(viii) Bestimmen einer Leistung der Version (21, 21A) des Algorithmus;
(ix) Qualifizieren eines Teils der hergestellten Teile auf Grundlage eines Teils (13) der Bilder, wobei dieser Schritt (ix) die folgenden Teilschritte umfasst:
- Bestimmen einer Unterteilung in einen ersten und einen zweiten Abschnitt des Teils der hergestellten Teile, auf Grundlage der Leistung;
- Qualifizieren des ersten Abschnitts des Teils der hergestellten Teile auf Grundlage eines Loses des Teils (13) der Bilder, nur anhand der Version (21 A) des Algorithmus;
- Anbringen der Markierung (33) auf einem anderen Los des Teils (13) der Bilder;
- Durchführen eines anderen Antriebs (53) der Version (21A) des Algorithmus auf Grundlage der Markierung (33) des anderen Loses des Teils (13) der Bilder;
(x) Entwickeln einer Version (22) des Algorithmus auf Grundlage der Leistung und des anderen Antriebs (53);
(xi) Wiederholen der Schritte (vii) bis (x).

2. Verfahren nach einem der vorstehenden Ansprüche, **dadurch gekennzeichnet, dass** die Markierung (31, 33) des Schrittes (iii) Anmerkungen und/oder Symbole und/oder Farben umfasst, die auf Grundlage eines Gradienten einer Intensitätsstufe des mindestens einen Abschnitts bestimmt werden.

3. Verfahren nach einem der vorstehenden Ansprüche, **dadurch gekennzeichnet, dass** die Markierung (31) im Schritt (iv) auf eine Vielzahl von Befensterungen mindestens eines Bereichs von Interesse der Bilder der Auswahl (11) angebracht wird.

4. Verfahren nach einem der vorstehenden Ansprüche, **dadurch gekennzeichnet, dass** der Antrieb (51) des Schritts (v) eine Identifizierung der Markierungen (31) umfasst, die auf den Bildern der Auswahl (11) realisiert worden sind.

5. Verfahren nach einem der vorstehenden Ansprüche, **dadurch gekennzeichnet, dass** der Schritt (vii) die folgenden Schritte umfasst:
- Bestimmen ersten Qualifikationsdaten jedes der hergestellten Teile des Teils der hergestellten Teile auf Grundlage eines Loses des Teils (12, 14) der Bilder, anhand der von einem ersten Bediener bereitgestellten Auskünfte;
- Bestimmen zweiten Qualifikationsdaten jedes der hergestellten Teile des Teils der hergestellten Teile auf Grundlage des Loses anhand der Version (21, 21A) des Algorithmus;
- Überprüfen einer Übereinstimmung der ersten und zweiten Qualifikationsdaten;
- Qualifizieren jedes der hergestellten Teile auf Grundlage der ersten und zweiten Qualifikationsdaten, wenn sie im Wesentlichen ähnlich sind; und
Qualifizieren jedes der hergestellten Teile auf Grundlage von Informationen, die von einem zweiten Bediener bereitgestellt werden, wenn sich die ersten und zweiten Qualifikationsdaten unterscheiden.

6. Verfahren nach einem der vorstehenden Ansprüche, **dadurch gekennzeichnet, dass** die Leistung im Schritt (viii) ausgehend von mindestens einem der folgenden Elemente bestimmt wird:
- einem Anteil von False-Positives einer Erkennung eines Fehlers eines der hergestellten Teile auf Grundlage des Teils (12, 14) der Bilder, und
- einem Anteil von False-Negatives einer Erkennung eines Fehlers eines der hergestellten Teile auf Grundlage des Teils (12, 14) der Bilder,
wobei die Anteile von False-Positives und von False-Negatives auf Grundlage einer Anzahl an Bildern bestimmt werden.

7. Verfahren nach einem der vorstehenden Ansprüche, **dadurch gekennzeichnet, dass** der Schritt (xi) die folgenden Schritte umfasst:
(xii) Qualifizieren eines Teils der hergestellten Teile auf Grundlage eines Teils (14) der Bilder, anhand:
- von Informationen, die von einem Bediener (43) bereitgestellt werden, und
- der zweiten Version (22) des Algorithmus,
sowie anhand der ersten Version (21A) des Algorithmus wenn die im Schritt (viii) bestimmte Leistung einen Fehleranteil unter einer ersten Schwelle umfasst;
(xiii) Bestimmen einer Leistung der zweiten Version (22) des Algorithmus;
(xiv) Entwickeln einer Version des Algorithmus (21A) auf Grundlage der Leistung, wobei die Version aus einer dritten Version (22) des Algorithmus besteht;
(xv) Qualifizieren eines Teils der hergestellten Teile auf Grundlage eines Teils (14) der Bilder, anhand:
- von Informationen, die von einem Bediener bereitgestellt werden, und
- der dritten Version (22) des Algorithmus, sowie anhand der zweiten Version (21A) des Algorithmus, wenn die im Schritt (xiii) bestimmte Leistung einen Fehleranteil unter einer zweiten Schwelle umfasst, wobei die zweite Schwelle kleiner als die erste Schwelle ist;
oder, sowie anhand der ersten Version (21A) des Algorithmus wenn die im Schritt (xiii) bestimmte Leistung einen Fehleranteil über der zweiten Schwelle umfasst, und die im Schritt (viii) bestimmte Leistung einen Fehleranteil unter einer ersten Schwelle umfasst;
(xvi) Bestimmen einer Leistung der dritten Version (22) des Algorithmus;
(xvii) Entwickeln einer Version des Algorithmus (21A) auf Grundlage der Leistung, wobei die Version aus einer vierten Version (22) des Algorithmus besteht.

8. Verfahren nach einem der vorstehenden Ansprüche, **dadurch gekennzeichnet, dass** jedes der hergestellten Teile eine Schaufel und ein Mantelring des Turbotriebwerks, die miteinander verschweißt sind, umfasst.

## Claims

1. Method for assisting with quality control on manufactured components, each of which comprises a welded vane of a turbomachine of an aircraft;
the method comprising the following steps:
(i) obtaining images (11, 12, 13, 14) by X-raying said manufactured components;
(ii) developing an algorithm (20) capable of qualifying at least one of said manufactured components on the basis of at least one of said images (11, 12, 13, 14), the obtained qualification comprising information from among a detection of a fault of a welding or an absence of a fault of a welding;
(iii) determining a marking (31, 33) to be applied on at least one portion of at least one of said images (11, 12, 13, 14);
(iv) applying said marking (31) to a selection (11) of said images;
(v) training (51) said algorithm (20) on the basis of said marking (31) of said selection (11) of said images;
(vi) developing a version (21) of said algorithm on the basis of said training (51);
(vii) qualifying a part of said manufactured components on the basis of a part (12, 14) of said images, by means:
- of information provided by an operator (41, 43), and
- of said version (21, 21A) of said algorithm,
the qualification (62, 64) obtained comprising information from among a detection of a fault of a welding or an absence of a fault of a welding;
(viii) determining a performance of said version (21, 21A) of said algorithm;
(ix) qualifying a part of said manufactured components on the basis of a part (13) of said images, this step (ix) comprising the following substeps:
- determining a partition into a first and a second portion of said part of said manufactured components, on the basis of said performance;
- qualifying said first portion of said part of said manufactured components on the basis of a batch of said part (13) of said images, only by the means of said version (21A) of said algorithm;
- applying said marking (33) to another batch of said part (13) of said images;
- another training (53) of said version (21A) of said algorithm on the basis of said marking (33) of said other batch of said part (13) of said images;
(x) developing a version (22) of said algorithm on the basis of said performance and of said other training (53);
(xi) repeating steps (vii) to (x).

2. Method according to any one of the preceding claims, **characterised in that** the marking (31, 33) of step (iii) comprises annotations and/or symbols and/or colours which are determined on the basis of a gradient of an intensity level of said at least one portion.

3. Method according to any one of the preceding claims, **characterised in that** said marking (31) is applied to step (iv) on a plurality of windowings of at least one zone of interest of said images of said selection (11).

4. Method according to any one of the preceding claims, **characterised in that** said training (51) of step (v) comprises an identification of the markings (31) made on the images of said selection (11).

5. Method according to any one of the preceding claims, **characterised in that** step (vii) comprises the following steps:
- determining first qualification data of each of the manufactured components of said part of said manufactured components on the basis of a batch of said part (12, 14) of said images, by means of information provided by a first operator;
- determining second qualification data of each of the manufactured components of said part of said manufactured components on the basis of said batch, by means of said version (21, 21A) of said algorithm;
- verifying a match of said first and second qualification data;
- qualifying each of said manufactured components on the basis of said first and second qualification data, when they are mainly similar; and
qualifying each of said manufactured components on the basis of information provided by a second operator, when said first and second qualification data differ.

6. Method according to any one of the preceding claims, **characterised in that** said performance is determined in step (viii) from at least one of the following elements:
- a false positive rate of detecting a fault of one of said manufactured components on the basis of said part (12, 14) of said images, and
- a false negative rate of detecting a fault of one of said manufactured components on the basis of said part (12, 14) of said images,
said false positive and false negative rates being determined on the basis of a number of images.

7. Method according to any one of the preceding claims, **characterised in that** step (xi) comprises the following steps:
(xii) qualifying a part of said manufactured components on the basis of a part (14) of said images, by means:
- of information provided by an operator (43), and
- of said second version (22) of said algorithm,
as well as by means of said first version (21A) of said algorithm when said performance determined in step (viii) comprises an error rate less than a first threshold;
(xiii) determining a performance of said second version (22) of said algorithm;
(xiv) developing a version of said algorithm (21A) on the basis of said performance, said version consisting of a third version (22) of said algorithm;
(xv) qualifying a part of said manufactured components on the basis of a part (14) of said images, by means:
- of information provided by an operator, and
- of said third version (22) of said algorithm, as well as by means of said second version (21A) of said algorithm, when said performance determined in step (xiii) comprises an error rate less than a second threshold, said second threshold being less than said first threshold;
or, as well as by means of said first version (21A) of said algorithm when said performance determined in step (xiii) comprises an error rate greater than said second threshold, and when said performance determined in step (viii) comprises an error rate less than said first threshold;
(xvi) determining a performance of said third version (22) of said algorithm;
(xvii) developing a version of said algorithm (21A) on the basis of said performance, said version consisting of a fourth version (22) of said algorithm.

8. Method according to any one of the preceding claims, **characterised in that** each of said manufactured components comprises a vane and a ferrule of said turbomachine, welded together.
